(19) Europäisches Patentamt
European Patent Office
Office européen des brevets

(11) **EP 4 163 199 A1**

(12) **EUROPEAN PATENT APPLICATION**
published in accordance with Art. 153(4) EPC

(43) Date of publication:
**12.04.2023 Bulletin 2023/15**

(21) Application number: **22826301.8**

(22) Date of filing: **21.06.2022**

(51) International Patent Classification (IPC):
**B63B 1/18** (2006.01)

(52) Cooperative Patent Classification (CPC):
Y02T 70/10

(86) International application number:
**PCT/RU2022/050196**

(87) International publication number:
**WO 2023/022624 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.08.2021 RU 2021124525**

(71) Applicant: **RYBALKIN, Anton Mikhailovich
Moscow 105215 (RU)**

(72) Inventor: **RYBALKIN, Anton Mikhailovich
Moscow 105215 (RU)**

(74) Representative: **Yuce, Serfinaz Sibel
ACAR IP
Darulaceze Cd. Eksioglu Plaza 36/8
34400, Kagithane, Istanbul (TR)**

(54) **PLANING BOAT**

(57)    The utility model relates to shipbuilding and concerns the design of hull shapes of high-speed planing vessels. The planing vessel has a hard chine hull, a bottom with sides, and a transom stem. Middle part of the bottom has a flat hydroski along its entire length, the width of which is 0.14÷0.15 of the vessel width. Long water gripping sponsons are between the hydroski and the sides which do not reach the transom and made with a stepped arrangement of the aft ends. Improved speed performance of the planing vessel in the planing mode is achieved thanks to the design of the hull capable of maintaining high speeds and stable movement of the vessel in calm water and seaways. 2 figures.

Фиг.1

# Description

The utility model relates to shipbuilding and concerns the design of hulls of high-speed planing vessels.

RU 2034736 C1, B63B 1/18 source dated May 10, 1995, specifies the hull of a planing vessel containing a deltoid ski-shaped bottom with a stem tunnel in the centerline plane, with keels with rudders on both sides of this tunnel, with the stem above-water body of the vessel hull is wider than its pointed fore body with an S-shaped stem post, with the ski-shaped bottom having a 12-13° sweep angle, and its aft body with side sections of the hydrofoil, hull is made with side turrets at a negative 3° angle relative to the horizontal plane of the waterline and, together with the central part of the hull, forming the side tunnels, with their arches forming a negative 4° angle relative to the horizontal plane of the waterline.

Disadvantage of the known planing vessel hull is the low speed and operational performance thereof.

Technical result achieved by the claimed utility model is an increase in the vessel speed performance thanks to the hull design which ensures maintained high speeds and stable movement of the vessel in calm water and seaway in the planing mode.

The claimed technical result is achieved by a planing vessel containing a hard chine hull, a bottom with sides and transom stem, while the middle part of the bottom has a flat hydroski along its entire length, the width of which is 0.14 ÷ 0.15 of the vessel width, with long water gripping sponsons between the hydroski and the sides which do not reach the transom and made with a stepped arrangement of the aft ends.

A hydrodynamic force occurs when the planing vessel moves thanks to the special shape of the hull bottom, which causes a significant upfloat of the vessel and its sliding on the water surface.

The hydroski provides a minimum draft for the vessel hull, as a result, there is no drag hump moment passing and there is no pitch angle in the draught transition regime.

At high speeds in the planing mode, the running pitch angle is significantly reduced and the main portion in the total drag is due to friction resistance. The water gripping sponsons on the bottom of the hull between the hydroski and the sides slow down the transverse flow under the bottom, as a result, additional pressure arises in the area of the sponson, which reduces the friction resistance of the vessel hull against water.

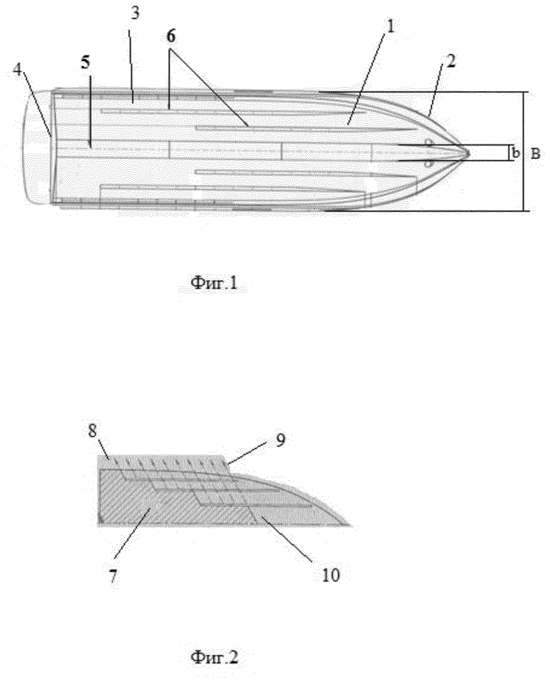

The water gripping sponsons between the hydroski and the sides with a stepped arrangement of the aft ends which do not reach the transom reduces the friction resistance of the hull against water, covers the spray sheet and reduces the wetted surface of the vessel hull, thus preventing a strong sweep of the aft body of the vessel hull (see Fig. 2) and providing a softer wave passage during planing, thereby increasing the speed performance of the planing vessel.

Model trials during the theoretical and practical calculation of the vessel bottom dimensions show that, subject to an optimal width of the hydroski of 0.14 ÷ 0.15 times the vessel width, the vessel planes on it when at full speed, thus maintaining a high speed and stable movement of the vessel. When the hydroski is wider than the specified ratio, the vessel will have different lift over drag ratio, since an increase in the vessel slide area will entail a loss of stability when planing at high speeds. When the hydroski is narrower and, consequently, the hydroski area is smaller, the lift over drag ratio of the vessel will decrease, which will entail an increase in the engine power, an increase in the pitch angle when entering the planing mode, and a decrease in the stability of the vessel at high speeds, thereby reducing the speed performance of the vessel.

In addition, the selection of the optimal width of the hydroski and the water gripping sponsons in the planing vessel provides transition onto plane and stable movement of the vessel in the planing mode at a lower speed than for vessels of the same size and draught, so the wear of the engines and the fuel consumption decrease and the cruising action in the planing mode increases, which improves the speed performance of the planing vessel.

At the same time, the hull of the planing vessel is not extreme when it gravitates towards the proper planing mode or towards the transition mode, but still adheres to the recommended average ranges of changes in its geometric characteristics.

Essence of the utility model is illustrated by drawings.

Fig. 1 shows the hull of the planing vessel.

Fig. 2 shows the layout of the long water gripping sponsons not reaching the transom, with a stepped arrangement of the aft ends.

The planing vessel has (see Fig. 1) the hard chine hull (1), including U-shaped or mixed frames, the fore body (2) with a sharp rising stem enabling wave passage with the least pitching, an anti-spray chine along the entire length of the hull, the bottom (3) with sides, and the transom stern (4). The vessel also has a spacious ergonomic day room, side doors to the day room, glazing, including a transparent roof, a deck on the transom, and a deck house (not shown in the Fig.).

The vessel hull is made of an all-welded hull and a superstructure made of marine aluminum, integral air ducts (air suction intakes) on the deck house top, to prevent the possibility of ingress of large masses of water into the engine section, and integral air suction inlets for the engines. The hull and the superstructure are made of 1561 alloy, which provides excellent corrosion resistance and high strength and mechanical properties of the structure in sea water operation.

The hydroski (5) made in the form of a flat section (flat plate) of the bottom (see Fig. 1) is In the middle section of the bottom (3) along its entire length.

Hydroski (5) width is 0.14÷0.15 of the vessel

$$\text{width}\overline{\text{b}} = \frac{b}{B} = 0.145$$

(see Fig. 1). Hydroski width is selected in such a way that the vessel planes on it periodically when at full speed, while maintaining a high speed and stable movement of the vessel.

The long water gripping sponsons (6) are between the hydroski and the sides, there are long longitudinal steps, with at least two on each side, in a stepped arrangement of the aft ends, covering the spray sheet area and not reaching the transom.

Fig. 2 shows the layout of the long water gripping sponsons not reaching the transom, with a stepped arrangement of the aft ends, with the positions indicated as: 7 for the wetted surface of the vessel bottom, 8 for the spray sheet area, 9 for the spray jets, and 10 for the fore boundary of the running waterline.

Thus, the claimed design of the planing vessel hull ensures an increase in the vessel speed performance by maintaining high speeds and stable movement of the vessel in calm water and seaways in the planing mode.

**Claims**

1. The planing vessel with a hard chine hull, a bottom with sides, and a transom stem **characterized by** the fact that the middle part of the bottom has a flat hydroski along its entire length, the width of which is 0.14÷0.15 of the vessel width, with long water gripping sponsons between the hydroski and the sides which do not reach the transom and made with a stepped arrangement of the aft ends.

Фиг.1

Фиг.2

## INTERNATIONAL SEARCH REPORT

| International application No. |
|---|
| PCT/RU 2022/050196 |

| A. CLASSIFICATION OF SUBJECT MATTER |
|---|
| B63B 1/18 (2006.01) |
| According to International Patent Classification (IPC) or to both national classification and IPC |

| B. FIELDS SEARCHED |
|---|
| Minimum documentation searched (classification system followed by classification symbols) |
| B63B 1/00-1/18, 35/00-35/70 |

| Documentation searched other than minimum documentation to the extent that such documents are included in the fields searched |
|---|
| |

| Electronic data base consulted during the international search (name of data base and, where practicable, search terms used) |
|---|
| PatSearch (RUPTO Internal), USPTO, PAJ, Espacenet, Information Retrieval System of FIPS |

| C. DOCUMENTS CONSIDERED TO BE RELEVANT | | |
|---|---|---|
| Category* | Citation of document, with indication, where appropriate, of the relevant passages | Relevant to claim No. |
| D, A | RU 2034736 C1 (ZHEMELA GRIGORIY MIKHAYLOVICH) 10.05.1995, abstract, figures 1-3 | 1 |
| A | RU 2622171 C1 (NENASHEV MAKSIM VLADIMIROVICH et al.) 13.06.2017, the claims, figures 1-2 | 1 |
| A | RU 81695 U1 (MODOV SERGEY ALEKSANDROVICH) 27.03.2009, the claims, figures 1-3 | 1 |
| A | US 3930455 A (HARRY BREMER) 06.01.1976, abstract, figures 1-6 | 1 |
| A | RU 144285 U1 (MISOZHNIKOV IL'YA GEORGIEVICH) 20.08.2014, the claims, figures 1-2, 4 | 1 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 October 2022 (11.10.2022) | 03 November 2022 (03.11.2022) |

| Name and mailing address of the ISA/ RU | Authorized officer |
|---|---|
| | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2034736 C1